# EUROPÄISCHE PATENTANMELDUNG

(11) **EP 3 401 291 A1**
(43) Veröffentlichungstag der Anmeldung: **14.11.2018**
(21) Anmeldenummer: 17000966.6
(22) Anmeldetag: 10.05.2017
(51) Int. Cl.: C04B 28/04, C04B 28/08

(54) **BAUELEMENT AUS BETON**

(71) Anmelder: Khan, Mohammed, 21726 Oldendorf (DE)
(72) Erfinder: Khan, Mohammed, 21726 Oldendorf (DE)
(74) Vertreter: Hauck Patentanwaltspartnerschaft mbB

(57) **Zusammenfassung**

Es wird ein Bauelement aus Beton enthaltend ein ausgehärtetes Gemisch aus Zement, Zuschlagstoffen und Wasser beschrieben. Das Bauelement weist als Zuschlagstoff einen Anteil an Glassplitt und keinen Sandanteil auf. Des Weiteren kann das Bauelement Blähglas als weiteren Zuschlagstoff enthalten. Das Bauelement zeichnet sich durch eine besonders hohe Druckfestigkeit bei geringem Gewicht aus.

## Beschreibung

Die vorliegende Erfindung betrifft ein Bauelement aus Beton enthaltend ein ausgehärtetes Gemisch aus Zement, Zuschlagstoffen und Wasser.

Bei Beton handelt es sich um einen Baustoff, der aus einem Gemisch von Zement, Zuschlagstoffen und Wasser, ggf. auch mit Betonzusatzmitteln und Betonzusatzstoffen, durch Erhärten entsteht. Es gibt eine Vielzahl von Zementarten, beispielsweise Portlandzement, die dem Fachmann bekannt sind. Als Zuschlagstoffe finden insbesondere Sand und Kies Verwendung.

Mit Sand werden Gesteinsteile bezeichnet, die lockere Anhäufungen von im Wesentlichen abgerundeten, überwiegend 0,06-2 mm großen Körnchen darstellen. Körniges Material mit Durchmessern von > 2 mm bezeichnet man als Kies. Hauptbestandteil der meisten Sand- und Kiesarten sind Quarz (SiO₂) oder entsprechende Silicate.

Der in Beton eingesetzte Sand besteht überwiegend aus abgerundeten Körnern, die ihre abgerundete Form durch natürliche Erosionsvorgänge erhalten haben.

Beton zeichnet sich bekannterweise durch eine relativ hohe Druckfestigkeit aus, während er nur relativ geringe Zugfestigkeitswerte besitzt. Zur Erhöhung der Zugfestigkeit findet eine entsprechende Stahlbewehrung Verwendung.

Der vorliegenden Erfindung liegt die Aufgabe zugrunde, ein Bauelement aus Beton der eingangs wiedergegebenen Art zu schaffen, das sich bei einer kostengünstigen Herstellung durch eine besonders hohe Belastbarkeit auszeichnet.

Diese Aufgabe wird erfindungsgemäß bei einem Bauelement der angegebenen Art dadurch gelöst, dass es als Zuschlagstoff einen Anteil an Glassplitt und keinen Sandanteil enthält.

Bei dem erfindungsgemäß als Zuschlagstoff eingesetzten Glassplitt handelt es sich um eckige bzw. kantige Glaskörner. Derartige Körner mit einer rauen Oberfläche verzahnen sich miteinander im hergestellten Betonbauelement, so dass sich ein Gerüst aus miteinander verzahnten Teilchen ergibt, das dem Betonbauelement entsprechende Stabilität verleiht. Wesentlich ist, dass hierbei keine abgerundeten Körner zum Einsatz kommen, da mit diesen Körnern kein gewünschter Verzahnungseffekt erreicht werden kann. Der hier verwendete Glassplitt soll daher im Wesentlichen ausschließlich aus derartigen eckigen Glasbestandteilen bestehen.

Im erfindungsgemäß ausgebildeten Betonbauelement ist kein Sandanteil enthalten. Derartige Partikel, die eine abgerundete Oberfläche aufweisen, kommen im erfindungsgemäß ausgebildeten Betonbauteil nicht zum Einsatz, da sie zu dem gewünschten Verzahnungseffekt nicht beitragen.

Erfindungsgemäß ist insbesondere vorgesehen, dass der Sandanteil eines üblichen Betonbauelementes durch den Glassplittanteil ersetzt ist. Es kommt daher vorzugsweise eine solche Menge an Glassplitt zum Einsatz, die dem Sandanteil eines üblichen Betonbauelementes entspricht. Durch den erfindungsgemäß zugesetzten Anteil an Glassplitt wird eine verbesserte Belastbarkeit des Betonbauteiles im Vergleich zu einem Sand enthaltenden Bauteil erzielt, insbesondere eine bessere Druckfestigkeit, die auf die Verzahnung der Glassplittpartikel untereinander sowie mit dem restlichen Teil der Zuschlagstoffe zurückzuführen ist.

Als Glassplitt können Partikel von üblichen Glasarten Verwendung finden. Vorzugsweise weist der erfindungsgemäß eingesetzte Glassplitt eine Korngröße von 0,01-2 mm auf.

Die eckige Form der verwendeten Glaspartikel wird vorzugsweise dann erreicht, wenn der Glassplitt aus zerkleinertem oder zermahlenem Glas besteht. Insbesondere kann der Glassplitt hierbei durch Zerkleinern von Glasgegenständen hergestellt sein, wobei hier recycelbare oder nichtrecycelbare Glasgegenstände Verwendung finden können.

Ein weiteres wichtiges Kriterium zur Beurteilung von Beton bzw. entsprechenden Betonbauelementen ist das Gewicht. Man ist in der Regel bestrebt, derartige Betonbauelemente so leicht wie möglich auszubilden, ohne dass hierunter jedoch die Festigkeit bzw. Belastbarkeit, insbesondere die Druckfestigkeit, leiden soll. Um eine entsprechende Gewichtsreduzierung ohne verschlechterte Festigkeitswerte zu erreichen, sieht die Erfindung bei einer speziellen Ausführungsform vor, dass das Betonbauelement einen Anteil an Blähglas aufweist. Das Blähglas besitzt dabei vorzugsweise eine Korngröße von 2-8 mm. Derartige Blähglaspartikel, die als Beimischung zum verwendeten Glassplitt dienen können, stellen einen leichten Zuschlagstoff dar und führen somit zu einer entsprechenden Gewichtsreduzierung des Betonbauelementes. Der Anteil an Blähglas kann zusätzlich zum Glassplitt Verwendung finden, vorzugsweise in einer Größenordnung in einem Verhältnis von etwa 1:10 (etwa ein Teil Blähglas auf zehn Teile Glassplitt).

Auch die erfindungsgemäß verwendeten Blähglaspartikel besitzen vorzugsweise eine eckige Form, so dass sie sich mit den Glassplittpartikeln verzahnen können und sich in das gebildete Traggerüst integrieren lassen.

Ein erfindungsgemäß ausgebildetes Betonbauelement weist beispielsweise folgende Trockengewichtsanteile auf:

| | |
|---|---|
| Glassplitt | 20-40 Gew.% |
| Kies | 40-60 Gew.% |
| Zement | 10-30 Gew.% |

Es versteht sich, dass das Bauelement ferner die üblichen Betonzusatzmittel und/oder Betonzusatzstoffe enthalten kann.

Falls als Zuschlagstoff Blähglas Verwendung findet, kann der Trockengewichtsanteil des Blähglases beispielsweise 2-10 Gew.% betragen.

In einem Ausführungsbeispiel wurde ein Betonwürfel mit den Abmessungen 15 cm x 15 cm x 15 cm durch Vermischen der nachfolgend aufgeführten Anteile mit der üblichen Wassermenge hergestellt. Es kamen hierbei folgende Materialien zum Einsatz, die nach dem Erhärten des Betons folgende Trockengewichtsanteile aufwiesen:

| | |
|---|---|
| Glassplitt, Korngröße 0,01-1 mm | 2.100 g |
| Blähglas, 2-8 mm | 200 g |
| Kies, 8-16 mm | 2.250 g |
| gebrochenes Gesteinsmaterial, 8-16 mm | 200 g |
| Kies, 16-32 mm | 1.400 g |
| Portlandzement R 52,5 | 1.200 g |

Nach dem Aushärten wurde ein Betonwürfel erhalten, der eine Druckfestigkeit von 22 N/mm² besaß und sich durch ein geringes Gewicht auszeichnete.

Um zu verhindern, dass der als Zuschlagstoff eingesetzte Glassplitt möglicherweise durch einen alkalischen Angriff aufgrund des zugesetzten Zementes beschädigt wird, sieht die Erfindung vorzugsweise vor, dass der Anteil an Glassplitt eine alkalibeständige Glasmasse umfasst. Auch wird hierbei vorzugsweise ein Zement eingesetzt, der einen niedrigen Alkaligehalt aufweist. Insbesondere kommt dabei ein Hochofenzement zur Anwendung.

Durch die vorstehend beschriebenen Maßnahmen kann eine Reaktion des Alkaligehaltes des zugesetzten Zementes mit der zugesetzten Glasmasse verhindert oder zumindest eingeschränkt werden. Betonschädliche Alkalireaktionen können auf diese Weise vermieden werden (die Reaktion von akalireaktiver Kieselsäure aufgrund der zugesetzten Glasmasse mit dem im Beton gelösten Alkalihydroxid zu einem Alkalisilikat kann dadurch unterdrückt bzw. reduziert werden, so dass eine Volumenvergrößerung mit anschließender Schädigung des Betons vermieden werden kann).

Der entsprechende Alkalieintrag wird im Wesentlichen durch den verwendeten Zement aber auch beispielsweise durch Taumittel, Umwelteinflüsse etc. bewirkt.

Als bevorzugter Zement kann beispielsweise ein Hochofenzement der Sorte CEM I-III verwendet werden.

Das erfindungsgemäße Bauelement umfasst vorzugsweise einen G19-Beton.

## Patentansprüche

1. Bauelement aus Beton enthaltend ein ausgehärtetes Gemisch aus Zement, Zuschlagstoffen und Wasser, **dadurch gekennzeichnet, dass** es als Zuschlagstoff einen Anteil an Glassplitt und keinen Sandanteil enthält.

2. Bauelement nach Anspruch 1, **dadurch gekennzeichnet, dass** der Sandanteil eines üblichen Betonbauelementes durch den Glassplittanteil ersetzt ist.

3. Bauelement nach Anspruch 1 oder 2, **dadurch gekennzeichnet, dass** der Glassplitt eine Korngröße von 0,01-2 mm aufweist.

4. Bauelement nach einem der vorangehenden Ansprüche, **dadurch gekennzeichnet, dass** der Glassplitt aus zermahlenem Glas besteht.

5. Bauelement nach einem der vorangehenden Ansprüche, **dadurch gekennzeichnet, dass** der Glasssplitt durch Zerkleinern von Glasgegenständen hergestellt ist.

6. Bauelement nach einem der vorangehenden Ansprüche, **dadurch gekennzeichnet, dass** es einen Anteil an Blähglas aufweist.

7. Bauelement nach Anspruch 6, **dadurch gekennzeichnet, dass** das Blähglas eine Korngröße von 2-8 mm besitzt.

8. Bauelement nach einem der vorangehenden Ansprüche, **dadurch gekennzeichnet, dass** es folgende Trockengewichtsanteile aufweist:
| | |
|---|---|
| Glassplitt | 20-40 Gew.% |
| Kies | 40-60 Gew.% |
| Zement | 10-30 Gew.% |

9. Bauelement nach Anspruch 6 oder 7, **dadurch gekennzeichnet, dass** der Trockengewichtsanteil des Blähglases 2-10 Gew.% beträgt.

10. Bauelement nach einem der vorangehenden Ansprüche, **dadurch gekennzeichnet, dass** der Anteil an Glassplitt eine alkalibeständige Glasmasse umfasst.

11. Bauelement nach einem der vorangehenden Ansprüche, **dadurch gekennzeichnet, dass** der verwendete Zement ein solcher mit niedrigem Alkaligehalt ist.

12. Bauelement nach einem der vorangehenden Ansprüche, **dadurch gekennzeichnet, dass** der verwendete Zement ein Hochofenzement ist.
